# EUROPÄISCHE PATENTSCHRIFT

(11) **EP 1 935 076 B1**
(45) Veröffentlichungstag und Bekanntmachung des Hinweises auf die Patenterteilung: **08.08.2012**
(21) Anmeldenummer: 06792866.3
(22) Anmeldetag: 17.08.2006
(51) Int. Cl.: H02K 1/18, H02K 23/04, H02K 5/167, H02K 1/17, H02K 5/08

(54) **ELEKTROMOTOR MIT GETEILTEM MAGNETISCHEM RÜCKSCHLUSSELEMENT**
ELECTRIC MOTOR COMPRISING A SPLIT MAGNETIC FEEDBACK ELEMENT
MOTEUR ELECTRIQUE A ELEMENT DE REFLUX MAGNETIQUE PARTAGE

(30) Priorität: 30.09.2005 DE 102005047445
(43) Veröffentlichungstag der Anmeldung: 25.06.2008
(73) Patentinhaber: ROBERT BOSCH GMBH, 70442 Stuttgart (DE)
(72) Erfinder: HUCK, Thomas, 77836 Rheinmuenster (DE); MILI, Tarek, 76133 Karlsruhe (DE)
(86) Internationale Anmeldenummer: PCT/EP2006/065388
(87) Internationale Veröffentlichungsnummer: WO 2007/039343

(56) Entgegenhaltungen:
- WO-A-2005/013458
- DE-A1- 2 222 666
- JP-A- 2000 050 537

## Beschreibung

### Stand der Technik

Die Erfindung betrifft einen Elektromotor sowie ein Verfahren zur Herstellung eines solchen, insbesondere zum Verstellen beweglicher Teile im Kraftfahrzeug, mit einem geteilten magnetischen Rückschlusselement nach der Gattung der unabhängigen Ansprüche.

Mit der DE 10352240 A1 bzw. der W02005/013458A1 ist ein Elektromotor bekannt geworden, dessen Gehäuse aus zwei Halbschalen besteht, die radial zur Ankerwelle montierbar sind. Im Gehäuse sind um den Rotor zwei Permanentmagnete angeordnet, die mittels zwei getrennten magnetischen Rückschlussteilen magnetisch miteinander gekoppelt sind. Die magnetischen Rückschlusselemente werden hierbei durch die radiale Montage der beiden Gehäuseteile gegeneinander verspannt und damit räumlich fixiert. Durch die Fertigungstoleranz der einzelnen Bauteile tritt hierbei jedoch eine Ungenauigkeit in der Positionierung der Rückschlussbleche und damit der Permanentmagneten gegenüber dem Anker auf, was die Qualität des Elektromotors deutlich beeinträchtigt. Außerdem tritt durch die Toleranzketten der einzelnen Bauteile ein Spiel zwischen diesen auf, wodurch störende Geräusche im Betrieb entstehen.

### Offenbarung der Erfindung

Der erfindungsgemäße Elektromotor und dessen Herstellungsverfahren mit den kennzeichnenden Merkmalen der unabhängigen Ansprüche haben den Vorteil, dass durch das Anformen einer definierten Anschlagsfläche am oberen magnetischen Rückschlussblech, die sich an einer entsprechenden Gegenanschlagsfläche des unteren Gehäuseteils abstützt, störende Bauteiltoleranzen ausgeglichen werden können.

Hierdurch werden die Permanentmagnete und die beiden Rückschlussbleche in einer exakt definierten Position dauerhaft zuverlässig fixiert, wodurch Leistungsverluste und störenden Geräusche wirksam vermieden werden. Durch die direkte Fixierung des oberen Rückschlussblechs am unteren Gehäuseteil lässt sich eine definierte Vorspannkraft erzeugen, mit der die Permanentmagneten und die beiden Rückschlussbleche in ihrer Position gehalten werden.

Am unteren Gehäuseteil ist eine zentrale Erhöhung ausgebilded ausgebildet, an der das unter Rückschlussblech aufliegt. Dadurch wird eine Verformung des unteren Gehäuseschale ermöglicht, ohne dass das untere Rückschlussblech mitverformt wird. Dadurch kann die erforderliche Vorspannkraft bzw. der erforderliche Toleranzausgleich durch die Verformung des unteren Gehäuseteils erzielt werden. Durch die in den Unteransprüchen aufgeführten Maßnahmen ergeben sich vorteilhafte Weiterbildungen und Verbesserungen der in den unabhängigen Ansprüchen angegebenen Merkmale

Zur einfachen Befestigung des oberen Rückschlussblechs können an dieses Aufnahmen für separate Befestigungsmittel angeformt werden, die mit einer definierten Kraft mit entsprechenden Gegenaufnahmen des unteren Gehäuseteils verbunden werden können.

In einer bevorzugten Ausgestaltung der Erfindung sind die Befestigungsmittel Schrauben, die selbstschneidend in eine entsprechende Bohrung des unteren Gehäuseteils eingedreht werden.

Zur zuverlässigen Befestigung des oberen Rückschlussblechs ist an diesem auf jeder Seite der Rotorachse eine Aufnahme angeordnet. Bevorzugt sind diese diagonal zur Rotorachse angeordnet, damit das Rückschlussblech in axialer Richtung nicht verkippen kann.

Zum Ausgleich der Bauteiltoleranzen der einzelnen Bauteile (Gehäuseteile, Rückschlussbleche, Permanentmagnete, Rotor) liegt zwischen den beiden Rückschlussblechen ein Spalt, der in Abhängigkeit des vorliegenden Toleranzausgleichs ein entsprechendes Maß einnimmt. Dadurch ist gewährleistet, dass die Permanentmagnete immer zuverlässig zwischen den beiden Rückschlussblechen eingespannt sind.

Von Vorteil ist es die Erhöhung zentral auszubilden. Das unter Rüchschlußblech liegt etwa mittigan der Erhöhung auf.

Günstig ist es, wenn das untere Rückschlussblech im Bereich der Erhöhung der Bodenfläche eine korrespondierende Verjüngung aufweist, wodurch das untere Rückschlusselement einfach gegenüber der unteren Gehäuseschale positioniert werden kann und ein exaktes bezugsmass für die Toleranzkette vorgegeben wird.

Durch die Verspannung der Permanentmagnete zwischen den Rückschlussblechen und dem unteren Gehäuseteil wird durch die Fixierung des oberen Rückschlussblechs am unteren Gehäuseteil eine sehr stabile Baueinheit mit exakten Positionsmaßen geschaffen, die unabhängig ist, von der Montage des oberen Gehäuseteils.

Die Rückschlussbleche können sehr kostengünstig jeweils als einstückige Biege-Stanzteile geformt werden, bei denen die Aufnahmen in einem Prozess mit ausgeformt werden können. Die Gehäuseteile können sehr kostengünstig mittels Kunststoff-Spritzgussverfahren gefertigt werden, wodurch diese auch eine für die Vorspannung notwendige Elastizität aufweisen.

Damit die Permanentmagnete einen definierten radialen Abstand zum Rotor einhalten, werden zwischen die Permanentmagnete Magnetspreizer radial eingeschoben, die die beiden Magnete radial auseinander drücken. Die Magnetspreizer können vorteilhaft einstückig in die Gehäuseteile angeformt werden.

Weisen die Rückschlussbleche radiale Öffnungen auf, in die die Magnetspreizer eingeschoben werden, können die Magnetspreizer mittels der Rückschlussbleche einfach positioniert werden. Aufgrund der angeformten radialen Öffnungen können sich die Rückschlussbleche über die gesamte axiale Länge der Permanentmagneten erstrecken, wodurch deren Wirkungsgrad erhöht wird.

Um die magnetischen Halbschalen in deren radialer Position zum Anker zuverlässig zu fixieren, sind im unteren Gehäuseteil Sicherungselemente angeformt, die durch das Rückschlussblech hindurch direkt an den Permanentmagneten anliegen und diese radial abstützen. Somit werden die Permanentmagnete einerseits in Montagerichtung durch die Rückschlussbleche fest verspannt, und andererseits in radialer Richtung (bezüglich der magnetischen Halbschalen) mittels der Kombination von den Magnetspreizer mit den Sicherungselementen fest fixiert.

Durch das erfindungsgemäße Herstellungsverfahren kann der Elektromotor mitsamt sich einer daran anschließenden Getriebeeinheit in vorteilhafter Weise komplett in radial in einer Montagerichtung montiert werden. Durch die radiale Montage des oberen Rückschlussblechs auf das untere Gehäuseteil und deren direkte Verbindung miteinander werden die Magnete zuverlässig positioniert. Dabei ist kein Einsatz von zusätzlichen Bauelementen, wie beispielsweise Federelemente in einem Poltopf, notwendig. Indem das obere Rückschlussteil mit seiner Anschlagsfläche auf der Gegenanschlagsfläche des unteren Gehäuseteils positioniert und unter Vorspannung fixiert wird, wird ein präziser Magnetkreis mit hoher Robustheit und Stabilität geschaffen.

Durch das Festschrauben des oberen Rückschlussblechs am unteren Gehäuseteil kann das obere Gehäuseteil völlig unabhängig vom Magnetkreis auf das untere Gehäuseteil montiert werden. Dadurch können hierfür einfachere oder weniger maßgenaue Verbindungsverfahren, wie beispielsweise Verrasten oder Verkleben verwendet werden, wobei eine eventuelle Verformung des oberen Gehäuseteils kein Einfluss hat auf die Maßgenauigkeit des Magnetkreises hat.

Damit die Permanentmagneten bei der Montage radial exakt zum Rotor positioniert sind, bevor die Magnete durch die Rückschlussbleche eingespannt werden, werden die Permanentmagnete durch eine Hilfsspreizeinrichtung in die korrekte Montageposition gebracht. Die Hilfsspreizeinrichtung greift hierbei in vorteilhafter Weise durch die radialen Öffnungen im oberen Rückschlussblech hindurch und wird nach der Befestigung des oberen Rückschlussblechs an der unteren Gehäuseschale wieder entfernt. Anschließend können bei der Montage des oberen Gehäuseteils daran angeordnete Magnetspreizer in die Öffnungen eingefügt werden, wodurch ein Loslösen der Permanentmagnete über die gesamte Betriebsdauer des Elektromotors verhindert wird.

### Zeichnungen

In den Zeichnungen sind verschiedene Ausführungsbeispiele einer erfindungsgemäßen Vorrichtung dargestellt und in der nachfolgenden Beschreibung näher erläutert. Es zeigen:
Figur 1 und Figur 2 einen Querschnitt und einen Längsschnitt eines erfindungsgemäßen Elektromotors,
Figur 3 eine Ansicht eines weiteren Ausführungsbeispiels und
Figur 4 ein unteres Gehäuseteil gemäß Figur 3 vor der Montage des Rotors mit dem Magnetkreis.

### Beschreibung der Ausführungsbeispiele

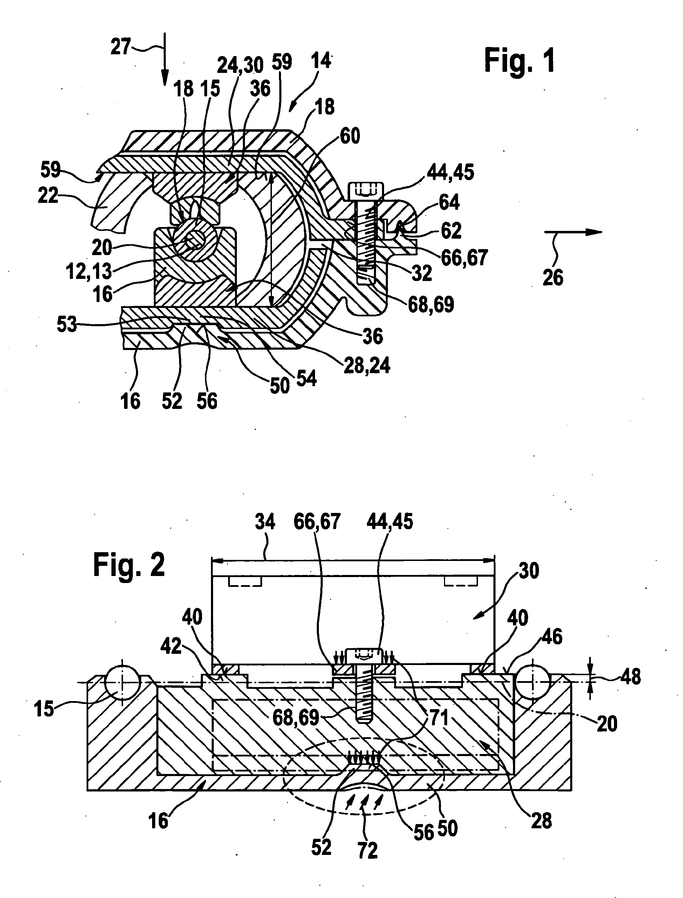

In Figur 1 ist ein Schnitt durch einen Elektromotor 10 dargestellt, bei dem ein Rotor 12 in einem Gehäuse 14 angeordnet ist, das ein unteres Gehäuseteil 16 und ein oberes Gehäuseteil 18 aufweist, die radial zur Achse des Rotors 12 miteinander verbindbar sind. Der Rotor 12 weist eine Ankerwelle 13 auf, die mittels Lagerelementen 15 zwischen den beiden Gehäuseteilen 16, 18 gelagert ist. Um den Rotor 12 sind Permanentmagnete 22 angeordnet, die mittels eines magnetischen Rückschlusselements 24 magnetisch miteinander gekoppelt sind. Die Permanentmagnete 22 sind beispielsweise schalenförmig ausgebildet und bezüglich deren radialer Richtung 26 einander gegenüber liegend bezüglich des Rotors 12 angeordnet. Das magnetische Rückschlusselement 24 weist ein unteres Rückschlussblech 28 und ein oberes Rückschlussblech 30 auf, die zusammen die Permanentmagnete 22 umschließen. Die Schalen der Permanentmagnete 22 sind in etwa 90° verdreht gegenüber der beiden schalenförmigen Rückschlussblechen 28, 30. Zwischen dem unteren und dem oberen Rückschlussblech 28, 30 ist ein Spalt 32 angeordnet, der sich über die gesamte axiale Länge 34 des Rückschlusselements 24 erstreckt, sodass sich die beiden Rückschlussbleche 28, 30 gegenseitig nicht berühren. Zwischen den beiden Permanentmagneten 22 sind so genannte Magnetspreizer 36 angeordnet, die ein Abstand der beiden Permanentmagnete 22 in radialer Richtung 26 vorgeben. Die Magnetspreizer 36 sind in diesem Ausführungsbeispiel jeweils einstückig an das untere und das obere Gehäuseteil 16, 18 angeformt, die jeweils aus Kunststoff hergestellt sind und insbesondere mittels Spritzgussverfahren gefertigt sind. Das obere Rückschlussblech 30 weist eine Anschlagsfläche 40 auf, die an einer entsprechenden Gegenanschlagsfläche 42 des unteren Gehäuseteils 16 anliegt. Die gegenanschlagsfläche 42 ist am oberen Rand des schalenförmigen unteren Gehäuseteils 16 angeordnet und bildet eine Art Flansch für die Anschlagsfläche 40, die am unteren Rand des oberen Rückschlussblechs 30 angeformt ist. Die Anschlagsfläche 40 ist über Verbindungsmittel 44 direkt mit der Gegenanschlagsfläche 42 verbunden, sodass die Anschlagsflächen 40, 42 eine Referenzfläche 46 bezüglich der Montage des Rückschlusselements 24 und der Permanentmagnete 22 bilden. Zwischen der Anschlagsfläche 40 und der Rotorachse 20 ergibt sich ein vorgebbarer Abstand 48, der fertigungstechnisch sehr präzise eingehalten werden kann. Über das obere Rückschlussblech 30 werden die Permanentmagnete 22 gegen das untere Rückschlussblech 28 gedrückt, das sich wiederum am unteren Gehäuseteil 16 abstützt. Hierzu weist das untere Gehäuseteil 16 an seiner Bodenfläche 50 eine Erhöhung 52 auf, die etwa an der Mitte 54 des unteren Rückschlussblechs 28 anliegt. Im Ausführungsbeispiel weist das untere Rückschlussblech 28 eine Verjüngung 53 auf, in die die Erhöhung 52 eingreift. Die Verjüngung 53 wird nach dem Fertigen des unteren Rückschlussteils 28 an dieses mit sehr kleinen Toleranzen angeformt, um ein exakt vorgebbares Maß für die Anlage der Erhöhung 52 vorzugeben. Zwischen dem unteren Rückschlussblech 28 und der Erhöhung 52 bildet sich eine lokal begrenzte Druckfläche 56 aus, wodurch sich das untere Gehäuseteil 16 zwischen der Druckfläche 56 und der Referenzfläche 46 verformt, um Bauteiltoleranzen auszugleichen und eine Vorspannkraft zur Fixierung der Permanentmagnete 22 in Montagerichtung 27 aufzubringen. Durch die Erhöhung 52 ist das untere Rückschlussblech 28 über einen weiten tangentialen Bereich beabstandet zum unteren Gehäuseteil 16 angeordnet, wodurch sich dieses leicht verformen kann. Die Toleranzkette ergibt sich ausgehend von der Referenzfläche 46 über den Abstand 48 zu einer Innenfläche 59 des oberen Rückschlussblechs 30, an dem die Permanentmagnete 22 in Montagerichtung 27 anliegen. Über die Bauhöhe 60 der Permanentmagnete 22 wird die Lage der begrenzten Druckfläche 56 in Relation zur Referenzfläche 46 bestimmt. Aufgrund der festen Verbindung zwischen der Anschlagsfläche 40 und der Gegenanschlagsfläche 42 (oberes Rückschlussblech 30 mit unterem Gehäuseteil 16) werden die auftretenden Toleranzen einerseits durch den Spalt 32 und andererseits durch die Verformung des unteren Gehäuseteils 16 ausgeglichen. Im Ausführungsbeispiel nach Figur 1 wird gleichzeitig mit der Befestigung des oberen Rückschlussblechs 30 am unteren Gehäuseteil 16 auch das obere Gehäuseteil 18 mit dem unteren Gehäuseteil 16 verbunden. Zwischen dem unteren Gehäuseteil 16 und dem oberen Gehäuseteil 18 ist eine Dichtkante 62 und eine korrespondierende Dichtung 64 angeordnet, die das Gehäuse 14 nach dem Verbinden der beiden Gehäuseteile 16, 18 abdichten. Die Verbindungsmittel 44 zwischen dem oberen Rückschlussblech 30 und dem unteren Gehäuseteil 16 sind hier als Schrauben 45 ausgebildet, die in Aufnahmen 66 des oberen Rückschlussblechs 30 aufgenommen sind und in entsprechenden Gegenaufnahmen 68 des unteren Gehäuseteils 16 eingreifen. Die Aufnahmen 66 sind einstückig mit dem oberen Rückschlussblech 30 als Aufnahmelaschen 67 ausgebildet, an denen gleichzeitig die Anschlagsfläche 40 angeformt ist. Die Gegenaufnahmen 68 sind als Gewindelöcher 69 ausgebildet, in die sich das Gewinde der Verbindungsmittel 44 einschneidet.

Figur 2 stellt ein Längsschnitt des Ausführungsbeispiels aus Figur 1 dar, wobei hier in einer Variation die Anschlagsfläche 40 nicht an den Aufnahmen 66 für die Verbindungsmittel 44 angeformt ist. Bei dieser Ausführung sind die Anschlagsflächen 40 beispielsweise an den axialen Enden des oberen Rückschlussblechs 30 und die Aufnahmen 66 beispielsweise axial mittig angeformt. In Figur 2 ist nochmals der Kraftfluss 71 eingezeichnet, der über die Verbindungsmittel 44 auf die begrenzte Druckfläche 56 einwirkt und dadurch eine Verformung 72 des unteren Gehäuseteils 16 an dessen Bodenfläche 50 bewirkt, die durch die Pfeile 72 symbolisiert ist.

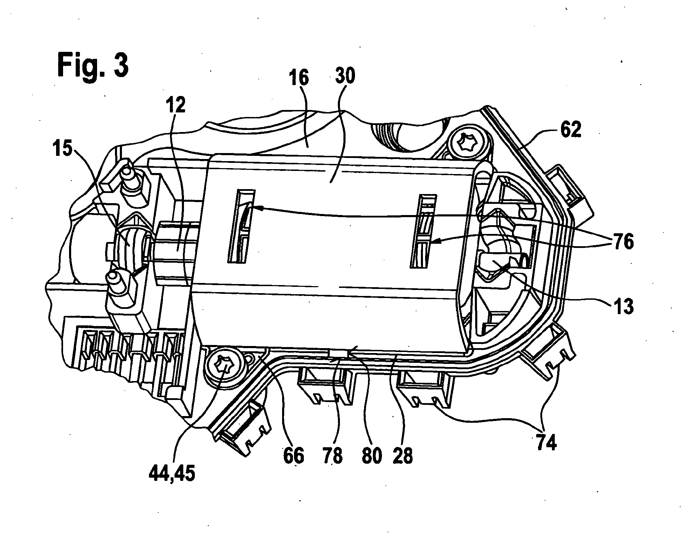

In Figur 3 ist eine weitere Variation einer erfindungsgemäßen Antriebseinheit 10 dargestellt, bei der die Aufnahmen 66 diagonal zur Rotorachse 20 angeordnet sind. Dabei ist nur das obere Rückschlussblech 30 (ohne Gehäuseteil 18) an den Aufnahmen 66 mittels der Verbindungsmittel 44 fest mit dem unteren Gehäuseteil 16 verbunden. Das obere Gehäuseteil 18, das hier nicht dargestellt ist, kann völlig unabhängig von der Befestigung des Rückschlusselements 24 nach dessen Montage mit dem unteren Gehäuseteil 16 zusammen gefügt werden. Hierzu sind an den Gehäuseteilen 16, 18, beispielsweise Rastelemente 74 angeformt, mittels derer die beiden Gehäuseteile 16, 18 miteinander verrastet bzw. verclipst werden. Die Rückschlussbleche 28, 30 weisen radiale Öffnungen 76 auf, in die hier nicht sichtbare Magnetspreizer 36 eingreifen können, um die beiden Permanentmagnete 22 in radialer Richtung 26 auseinander zu drücken. Die Rückschlussbleche,28, 30 sind beispielsweise als Biege-Stanzteile aus magnetleitfähigem Material hergestellt, an dessen Rand die Aufnahmelaschen 67 einstückig angeformt sind und die radialen Öffnungen 76 einfach ausstanzbar sind.

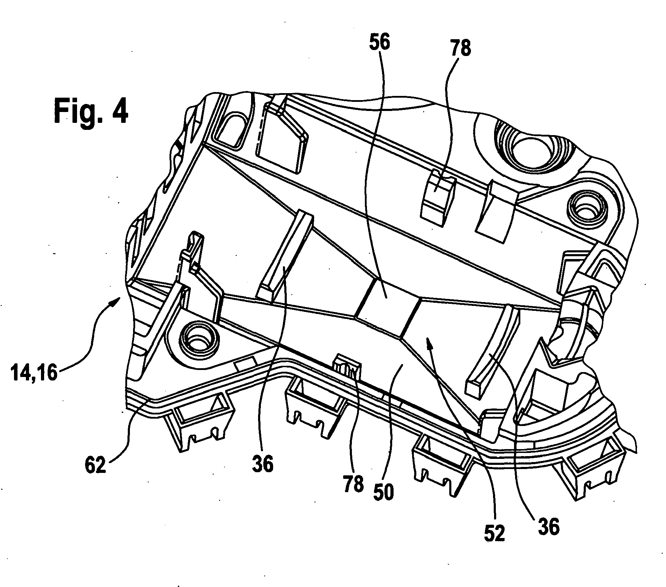

Figur 4 zeigt das untere Gehäuseteil 16 des Ausführungsbeispiels aus Figur 3 vor der Montage des Rotors 12 und des Rückschlusselements 24. An der Bodenfläche 50 sind hier die Magnetspreizer 36 angeordnet, die beispielsweise mittels Spritzgießen einstückig mit dem Gehäuseteil 16 ausgebildet sind. In der Bodenfläche 50 ist eine Erhöhung 52 angeformt, die nach der Montage des unteren Rückschlussblechs 28 an dessen Mitte 54 eine begrenzte Druckfläche 56 bildet. Die Erhöhung 52 ist hier pyramidenförmig ausgebildet, sodass sich das untere Gehäuseteil 16 bezüglich der begrenzten Druckfläche 56 in alle vier Richtungen verformen kann. Die abgeflachte Spitze der Pyramide stellt dabei die begrenzte Druckfläche 56 dar. Des Weiteren sind am unteren Gehäuseteil 16 Sicherungselemente 78 angeordnet, die durch entsprechende Aussparungen 80 des unteren Rückschlussblechs 28 eingreifen und in radialer Richtung 26 an den Permanentmagneten 22 anliegen. Die Permanentmagnete 22 werden somit in radialer Richtung 26 durch die Kombination der Magnetspreizer 36 und der Sicherungselemente 78, deren Funktion alternativ auch direkt vom unteren Rückschlussblech 28 übernommen werden kann, örtlich fixiert. In Montagerichtung 27 werden die Permanentmagnete 22 mittels der Verbindungsmittel 44 zwischen dem oberen Rückschlussblech 30 und dem unteren Gehäuseteil 16 verspannt.

Zur Montage des erfindungsgemäßen Elektromotors 10 wird in Montagerichtung 27 erst das untere Rückschlussblech 28 in das untere Gehäuseteil 16 eingelegt. Danach wird der Rotor 12 über die Lagerelemente 15 in das untere Gehäuseteil 16 eingefügt. Anschließend werden die magnetisierten Permanentmagnete 22 in das untere Rückschlussblech 28 eingesetzt und mit dem oberen Rückschlussblech 30 abgedeckt. Dann wird das obere Rückschlussblech 30, das mit einer Anschlagsfläche 40 an der Gegenanschlagsfläche 42 des unteren Gehäuseteil 16 anliegt, mit diesem fest verbunden, z.B. verschraubt. Während dieses Befestigungsvorgangs werden die Permanentmagnete 22 mittels einer Hilfsspreizeinrichtung für die Magneten 22 in radialer Richtung 26 in Position gehalten. Nach dem Verschrauben ist der Magnetkreis komplett montiert, sodass das obere Gehäuseteil 18 zu einem beliebigen Zeitpunkt, beispielsweise nach der Montage des Getriebes, mit dem unteren Gehäuseteil 16 verbunden wird.

Es sei angemerkt, dass hinsichtlich der in den Figuren und der Beschreibung dargestellten Ausführungsbeispiele vielfältige Kombinationsmöglichkeiten der einzelnen Merkmale untereinander möglich sind. So kann beispielsweise die konkrete Anordnung der Anschlagsfläche 40 und der Aufnahmen 66 am oberen Rückschlussblech 30 - sowie deren Anzahl - variiert werden. Anstelle der Schrauben 45 können auch andere Verbindungsmittel 44 verwendet werden. Ebenso kann die Form und Anordnung der Erhöhung 52, sowie der Magnetspreizer 36 und der Sicherungselemente 78 verändert werden. Bevorzugt findet der erfindungsgemäße Elektromotor 10 für eine Getriebe-Antriebseinheit Anwendung, bei der der Elektromotor 10 und ein diesem nachfolgendes Getriebe in einem gemeinsamen Gehäuse angeordnet sind. Das Gehäuse kann außer den zwei schalenförmige Gehäuseteile 16, 18 auch noch weitere Gehäuseteile aufweisen.

## Patentansprüche

1. Elektromotor (10), insbesondere zum Verstellen beweglicher Teile im Kraftfahrzeug, mit einem Rotor (12), einem unteren Gehäuseteil (16) und einem oberen Gehäuseteil (18), die radial zum Rotor (12) zusammenfügbar sind, und mit mindestens zwei Permanentmagneten (22), die mittels eines magnetischen Rückschlusselements (24) gekoppelt sind, das ein unteres Rückschlussblech (28) und ein oberes Rückschlussblech (30) aufweist, **dadurch gekennzeichnet, dass** das obere Rückschlussblech (30) eine Anschlagsfläche (40) aufweist, die an einer Gegenanschlagsfläche (42) des unteren Gehäuseteils (16) anliegt, und das obere Rüchschlußblech (130) derart am unteren Gehäuseteil (16) befestigt ist, dass über die Permanentmagnete (22) das untere Rüchschlußblech (28) gegen eine Erhöhung (52) der Bodenflüche (50 des unteren Gehäuseteils (16), gepresst ist, wodurch sich das untere Gehäuseteil (16) dauerhaft verformt.

2. Elektromotor (10) nach Anspruch 1, **dadurch gekennzeichnet, dass** das obere Rückschlussblech (30) direkt am unteren Gehäuseteil (16) befestigt ist.

3. Elektromotor (10) nach einem der Ansprüche 1 oder 2, **dadurch gekennzeichnet, dass** am oberen Rückschlussblech (30) Aufnahmen (66) für Befestigungsmittel (44) angeordnet sind, die in entsprechende Gegenaufnahmen (68) des unteren Gehäuseteils (16) eingreifen.

4. Elektromotor (10) nach einem der vorhergehenden Ansprüche, **dadurch gekennzeichnet, dass** die Befestigungsmittel (44) als Schrauben (45) ausgebildet sind, die insbesondere in die als Gewindebohrungen (69) ausgebildete Gegenaufnahmen (68) greifen.

5. Elektromotor (10) nach einem der vorhergehenden Ansprüche, **dadurch gekennzeichnet, dass** die - insbesondere zwei - Aufnahmen (66) diagonal zur Achse (20) des Rotors (12) angeformt sind.

6. Elektromotor (10) nach einem der vorhergehenden Ansprüche, **dadurch gekennzeichnet, dass** zwischen den mindestens zwei Rückschlussblechen (28, 30) mindestens ein Spalt (32) angeordnet ist, der sich über die gesamte axiale Länge (34) des Rückschlusselements (24) erstreckt.

7. Elektromotor (10) nach einem der vorhergehenden Ansprüche, **dadurch gekennzeichnet, dass** die Erhöhung (52) an der Mitte (54) des unteren Rückschlussblechs (28) angeordnet ist.

8. Elektromotor (10) nach einem der vorhergehenden Ansprüche, **dadurch gekennzeichnet, dass** in der Mitte (54) des unteren Rückschlussblechs (28) eine Verjüngung (53) - insbesondere mittels nachträglichem Verprägen - ausgebildet ist, die an der Erhöhung (52) der Bodenfläche (50) anliegt.

9. Elektromotor (10) nach einem der vorhergehenden Ansprüche, **dadurch gekennzeichnet, dass** die Gehäuseteile (16, 18) aus Kunststoff und die Rückschlussbleche (28, 30) als metallisches Stanz-Biege-Teile ausgebildet sind, wobei die Aufnahmen (66) insbesondere einstückig als Laschen (67) angeformt sind.

10. Elektromotor (10) nach einem der vorhergehenden Ansprüche, **dadurch gekennzeichnet, dass** am unteren und/oder oberen Gehäuseteil (16, 18) ein Magnetspreizer (36) angeordnet ist, der als Abstandshalter radial zwischen die beiden Permanentmagnete (22) eingreift.

11. Elektromotor (10) nach einem der vorhergehenden Ansprüche, **dadurch gekennzeichnet, dass** die Rückschlussbleche (28, 30) radiale Löcher (76) aufweisen, die von den Magnetspreizern (36) durchdrungen sind.

12. Elektromotor (10) nach einem der vorhergehenden Ansprüche, **dadurch gekennzeichnet, dass** am unteren Gehäuseteil (16) Sicherungselemente (78) angeordnet sind, die in Aussparungen (80) des unteren Rückschlussblechs (28) eingreifen und die Permanentmagnete (22) radial gegen den Rotor (12) drücken.

13. Verfahren zum Herstellen eines Elektromotors (10), insbesondere nach einem der Ansprüche 1 bis 12, mit mindestens einem in einem unteren Gehäuseteil (16) und einem oberen Gehäuseteil (18) gelagerten Rotor (12) und mindestens zwei Permanentmagneten (22), die mittels eines unteren Rückschlussblechs (28) und eines oberen Rückschlussblechs (30) magnetisch miteinander gekoppelt sind mit den Montageschritten:
- das untere Rückschlussblech (28) wird in das untere Gehäuseteil (16) eingesetzt
- die Permanentmagnete (22) und der Rotor (12) werden innerhalb des ersten Rückschlussblechs (28) positioniert
ge**gekennzeichnet durch** folgende Montageschritte:
- das obere Rückschlussbleich (30) wird auf die Permanentmagnete (22) und mit einer Anschlagsfläche (40) auf eine Gegenanschlagsfläche (42) des unteren Gehäuseteils (16) aufgesetzt,
- wobei das untere Rückschlussblech (28) **durch** die Befestigung des oberen Rückschlussblechs (30) am unteren Gehäuseteil (16) über die Permanentmagnete (22) gegen eine Erhöhung (52) der Bodenfläche (50) des unteren Gehäuseteils (16) gepresst wird, wodurch sich das untere Gehäuseteil (16) dauerhaft verformt.

14. Verfahren nach Anspruch 13, **dadurch gekennzeichnet, dass** das obere Rückschlussteil (30) am unteren Gehäuseteil (16) festgeschraubt wird, bevor das obere Gehäuseteil (18) montiert, insbesondere mit dem unteren Gehäuseteil (16) verrastet wird.

15. Verfahren nach Anspruch 14, **dadurch gekennzeichnet, dass** während der Befestigung des oberen Rückschlussteils (30) am unteren Gehäuseteil (16) die Permanentmagnete (22) mittels einer Hilfsspreizeinrichtung, die in radiale Öffnungen (76) des oberen Rückschlussteils (30) eingreift, in der richtigen Montageposition gehalten werden.

## Claims

1. Electric motor (10), in particular for adjusting moving parts in a motor vehicle, having a rotor (12), a lower housing part (16) and an upper housing part (18), which housing parts can be joined to one another radially with respect to the rotor (12), and having at least two permanent magnets (22) which are coupled by means of a magnetic return path element (24) which has a lower return path plate (28) and an upper return path plate (30), **characterized in that** the upper return path plate (30) has a stop surface (40) which bears against a mating stop surface (42) of the lower housing part (16), and the upper return path plate (30) is attached to the lower housing part (16) in such a way that the lower return path plate (28) is pressed against a raised portion (52) of the base surface (50) of the lower housing part (16) by means of the permanent magnets (22), as a result of which the lower housing part (16) is permanently deformed.

2. Electric motor (10) according to Claim 1, **characterized in that** the upper return path plate (30) is attached directly to the lower housing part (16).

3. Electric motor (10) according to either of Claims 1 and 2, **characterized in that** holders (66) for attachment means (44) are arranged on the upper return path plate (30), the said holders engaging in corresponding mating holders (68) in the lower housing part (16).

4. Electric motor (10) according to one of the preceding claims, **characterized in that** the attachment means (44) are in the form of screws (45) which engage, in particular, in the mating holders (68) which are in the form of threaded bores (69).

5. Electric motor (10) according to one of the preceding claims, **characterized in that** the - in particular two - holders (66) are integrally formed diagonally to the axis (20) of the rotor (12).

6. Electric motor (10) according to one of the preceding claims, **characterized in that** at least one gap (32) is arranged between the at least two return path plates (28, 30), the said gap extending over the entire axial length (34) of the return path element (24).

7. Electric motor (10) according to one of the preceding claims, **characterized in that** the raised portion (52) is arranged at the centre (54) of the lower return path plate (28).

8. Electric motor (10) according to one of the preceding claims, **characterized in that** a tapered portion (53) is formed in the centre (54) of the lower return path plate (28) - in particular by means of subsequent compression by stamping - the said tapered portion bearing against the raised portion (52) of the base surface (50).

9. Electric motor (10) according to one of the preceding claims, **characterized in that** the housing parts (16, 18) are formed from plastic and the return path plates (28, 30) are in the form of metal stamped and bent parts, with the holders (66) being, in particular, integrally formed as lugs (67).

10. Electric motor (10) according to one of the preceding claims, **characterized in that** a magnet spreader (36) is arranged on the lower and/or upper housing part (16, 18), the said magnet spreader engaging radially between the two permanent magnets (22) as a spacer.

11. Electric motor (10) according to one of the preceding claims, **characterized in that** the return path plates (28, 30) have radial holes (76) through which the magnet spreaders (36) pass.

12. Electric motor (10) according to one of the preceding claims, **characterized in that** securing elements (78) are arranged on the lower housing part (16), the said securing elements engaging in cutouts (80) in the lower return path plate (28) and pressing the permanent magnets (22) radially against the rotor (12).

13. Method for producing an electric motor (10), in particular according to one of Claims 1 to 12, having at least one rotor (12) which is mounted in a lower housing part (16) and an upper housing part (18), and at least two permanent magnets (22) which are magnetically coupled to one another by means of a lower return path plate (28) and an upper return path plate (30), comprising the assembly steps of:
- the lower return path plate (28) being inserted into the lower housing part (16) and
- the permanent magnets (22) and the rotor (12) being positioned within the first return path plate (28),
**characterized by** the following assembly steps:
- the upper return path plate (30) being placed on the permanent magnets (22) and, by way of a stop surface (40), on a mating stop surface (42) of the lower housing part (16),
- with the lower return path plate (28) being pressed against a raised portion (52) of the base surface (50) of the lower housing part (16) by the upper return path plate (30) being attached to the lower housing part (16) by means of the permanent magnets (22), as a result of which the lower housing part (16) is permanently deformed.

14. Method according to Claim 13, **characterized in that** the upper return path part (30) is firmly screwed to the lower housing part (16) before the upper housing part (18) is fitted, in particular locked to the lower housing part (16).

15. Method according to Claim 14, **characterized in that**, while the upper return path part (30) is being attached to the lower housing part (16), the permanent magnets (22) are retained in the correct assembly position by means of an auxiliary spreading device which engages in radial openings (76) in the upper return path part (30).

## Revendications

1. Moteur électrique (10), en particulier pour déplacer des pièces mobiles dans un véhicule automobile, comprenant un rotor (12), une partie de boîtier inférieure (16) et une partie de boîtier supérieure (18), qui peuvent être réunies radialement pour former le rotor (12), et au moins deux aimants permanents (22), qui sont accouplés au moyen d'un élément de reflux magnétique (24), qui présente une tôle de reflux inférieure (28) et une tôle de reflux supérieure (30), **caractérisé en ce que** la tôle de reflux supérieure (30) présente une surface de butée (40) qui s'applique contre une surface de butée conjuguée (42) de la partie de boîtier inférieure (16), et la tôle de reflux supérieure (30) est fixée à la partie de boîtier inférieure (16) de telle sorte que par le biais des aimants permanents (22), la tôle de reflux inférieure (28) soit pressée contre un rehaussement (52) de la surface de fond (50) de la partie de boîtier inférieure (16), de sorte que la partie de boîtier inférieure (16) se déforme de manière permanente.

2. Moteur électrique (10) selon la revendication 1, **caractérisé en ce que** la tôle de reflux supérieure (30) est fixée directement à la partie de boîtier inférieure (16).

3. Moteur électrique (10) selon l'une quelconque des revendications 1 ou 2, **caractérisé en ce que** des logements (66) pour des moyens de fixation (44) sont disposés sur la tôle de reflux supérieure (30), lesquels viennent en prise dans des logements conjugués correspondants (68) de la partie de boîtier inférieure (16).

4. Moteur électrique (10) selon l'une quelconque des revendications précédentes, **caractérisé en ce que** les moyens de fixation (44) sont réalisés sous forme de vis (45) qui viennent en prise notamment dans les logements conjugués (68) réalisés sous forme d'alésages filetés (69).

5. Moteur électrique (10) selon l'une quelconque des revendications précédentes, **caractérisé en ce que** les - en particulier deux - logements (66) sont façonnés diagonalement par rapport à l'axe (20) du rotor (12).

6. Moteur électrique (10) selon l'une quelconque des revendications précédentes, **caractérisé en ce qu'**entre les au moins deux tôles de reflux (28, 30) est disposée au moins une fente (32) qui s'étend sur toute la longueur axiale (34) de l'élément de reflux (24).

7. Moteur électrique (10) selon l'une quelconque des revendications précédentes, **caractérisé en ce que** le rehaussement (52) est disposé au milieu (54) de la tôle de reflux inférieure (28).

8. Moteur électrique (10) selon l'une quelconque des revendications précédentes, **caractérisé en ce qu'**un rétrécissement (53) est réalisé - en particulier au moyen d'un matriçage subséquent - au milieu (54) de la tôle de reflux inférieure (28), ce rétrécissement s'appliquant contre le rehaussement (52) de la surface de fond (50).

9. Moteur électrique (10) selon l'une quelconque des revendications précédentes, **caractérisé en ce que** les parties de boîtier (16, 18) sont réalisées en plastique et les tôles de reflux (28, 30) sont réalisées sous forme de pièces estampées - cintrées, les logements (66) étant notamment façonnés d'une seule pièce sous forme de pattes (67).

10. Moteur électrique (10) selon l'une quelconque des revendications précédentes, **caractérisé en ce qu'**un écarteur magnétique (36) est disposé au niveau de la partie de boîtier inférieure et/ou supérieure (16, 18), lequel vient en prise en tant qu'élément d'écartement radialement entre les deux aimants permanents (22).

11. Moteur électrique (10) selon l'une quelconque des revendications précédentes, **caractérisé en ce que** les tôles de reflux (28, 30) présentent des trous radiaux (76) qui sont traversés par les écarteurs magnétiques (36).

12. Moteur électrique (10) selon l'une quelconque des revendications précédentes, **caractérisé en ce que** des éléments de fixation (78) sont disposés sur la partie de boîtier inférieure (16), lesquels éléments de fixation viennent en prise dans des évidements (80) de la tôle de reflux inférieure (28) et pressent les aimants permanents (22) radialement contre le rotor (12).

13. Procédé pour fabriquer un moteur électrique (10), en particulier selon l'une quelconque des revendications 1 à 12, comprenant au moins un rotor (12) monté dans une partie de boîtier inférieure (16) et une partie de boîtier supérieure (18) et au moins deux aimants permanents (22) qui sont accouplés magnétiquement l'un à l'autre au moyen d'une tôle de reflux inférieure (28) et d'une tôle de reflux supérieure (30), comprenant les étapes de montage suivantes :
- la tôle de reflux inférieure (28) est insérée dans la partie de boîtier inférieure (16),
- les aimants permanents (22) et le rotor (12) sont positionnés à l'intérieur de la première tôle de reflux (28),
**caractérisé par** les étapes de montage suivantes :
- la tôle de reflux supérieure (30) est placée sur les aimants permanents (22) et avec une surface de butée (40) sur une surface de butée conjuguée (42) de la partie de boîtier inférieure (16),
- la tôle de reflux inférieure (28) étant pressée par la fixation de la tôle de reflux supérieure (30) sur la partie de boîtier inférieure (16) par le biais des aimants permanents (22) contre un rehaussement (52) de la surface de fond (50) de la partie de boîtier inférieure (16), de sorte que la partie de boîtier inférieure (16) se déforme de manière permanente.

14. Procédé selon la revendication 13, **caractérisé en ce que** la tôle de reflux supérieure (30) est vissée solidement à la partie de boîtier inférieure (16) avant que la partie de boîtier supérieure (18) ne soit montée, notamment ne soit emboîtée avec la partie de boîtier inférieure (16).

15. Procédé selon la revendication 14, **caractérisé en ce que** pendant la fixation de la tôle de reflux supérieure (30) à la partie de boîtier inférieure (16), les aimants permanents (22) sont maintenus dans la position de montage correcte au moyen d'un dispositif d'écartement auxiliaire, qui vient en prise dans des ouvertures radiales (76) de la tôle de reflux supérieure (30).
